# EUROPÄISCHE PATENTSCHRIFT

(11) **EP 3 277 011 B1**
(45) Veröffentlichungstag und Bekanntmachung des Hinweises auf die Patenterteilung: **08.09.2021**
(21) Anmeldenummer: 17180654.0
(22) Anmeldetag: 11.07.2017
(51) Int. Cl.: H04L 29/06, H04W 12/06, H04W 12/50, H04L 29/08

(54) **VERFAHREN ZUM BEREITSTELLEN EINER AUTHENTIFIZIERTEN VERBINDUNG ZWISCHEN MINDESTENS ZWEI KOMMUNIKATIONSPARTNERN**
METHOD FOR PROVIDING AN AUTHENTICATED CONNECTION BETWEEN AT LEAST TWO COMMUNICATION PARTNERS
PROCÉDÉ PERMETTANT D'OBTENIR UNE LIAISON AUTHENTIFIÉE ENTRE AU MOINS DEUX PARTENAIRES DE COMMUNICATION

(30) Priorität: 26.07.2016 DE 102016213686
(43) Veröffentlichungstag der Anmeldung: 31.01.2018
(73) Patentinhaber: VOLKSWAGEN AKTIENGESELLSCHAFT, 38440 Wolfsburg (DE)
(72) Erfinder: Winkelvos, Timo, 38173 Sickte (DE); Tschache, Alexander, 38436 Wolfsburg (DE); Wuschke, Martin, 38527 Meine (DE)

(56) Entgegenhaltungen:
- US-A1- 2009 222 659
- US-A1- 2009 325 491
- US-A1- 2015 339 334
- Anonymous: "Bluetooth - Wikipedia", , 22 July 2016 (2016-07-22), XP055544577, Retrieved from the Internet: URL:https://en.wikipedia.org/w/index.php?t itle=Bluetooth&oldid=731033839 [retrieved on 2019-01-18]

## Beschreibung

Die Erfindung betrifft ein Verfahren zum Bereitstellen einer authentifizierten Verbindung zwischen mindestens zwei Kommunikationspartnern und ein Kommunikationssystem.

Moderne Fahrzeuge verfügen über Infotainment-Systeme, welche sich mit Smartphones koppeln lassen. Durch die Kopplung kann ein Infotainment-System beispielsweise auf Medieninhalte zugreifen, welche auf dem gekoppelten Smartphone gespeichert sind, um diese im Fahrzeug wiederzugeben.

Außerdem kann eine signalleitende Verbindung zwischen dem fahrzeuginternen Infotainment-System und dem Smartphone dazu verwendet werden, eine Benutzeridentifikation durchzuführen oder dem Infotainment-System anwendungsbezogene Benutzerdaten bereitzustellen.

Da zwischen dem Infotainment-System und dem Smartphone üblicherweise auch personenbezogene Daten und anwendungsbezogene Zugangsdaten übermittelt werden, ist diese signalleitende Verbindung mit einem geeigneten Schutz auszustatten.

Hierzu schlägt die Druckschrift DE 10 2005 028 663 A1 ein Verfahren vor, bei welchem Datenpakete zwischen einer Sende-/Empfangseinrichtung des Fahrzeugs und einer externen Sende-/Empfangsstation ausgetauscht werden, wobei die Vertrauenswürdigkeit des externen Kommunikationspartners ermittelt werden kann, um so eine Sicherheitsstufe festzulegen. Die Vertrauenswürdigkeit des Kommunikationspartners wird dabei beispielsweise durch einen Austausch von Zertifikaten ermittelt.

In der Druckschrift DE 10 2012 211 682 A1 ist eine fahrzeuggestützte Datenverarbeitungsvorrichtung offenbart, welche dafür ausgelegt ist, drahtlos mit einer sich in dem Fahrzeug befindenden drahtlosen Einrichtung zu kommunizieren. Zum Verbindungsaufbau wird eine Verbindungsanforderung von der drahtlosen Einrichtung an die fahrzeuggestützte Datenverarbeitungsvorrichtung versendet, welche den Namen einer Anwendung umfasst, welche die Kommunikationsverbindung nutzen möchte. Die Anwendungen können mit einem spezifischen Zertifikat signiert werden, wodurch diese nur mit spezifischen Fahrzeugen in Interaktion treten können.

Darüber hinaus schlägt die Druckschrift DE 10 2013 225 742 A1 ein System vor, das ein drahtloses Kommunikationsgerät, ein Fahrzeug und einen einen Schlüssel bereitstellenden Server umfasst. Der den Schlüssel bereitstellende Server ist kommunikativ mit dem drahtlosen Kommunikationsgerät und dem Fahrzeug gekoppelt. Das drahtlose Kommunikationsgerät kommuniziert eine Anforderungsmitteilung, um eine temporäre Sicherheitsinformation, wie einen öffentlichen Schlüssel und/oder ein digitales Zertifikat anzufordern. Der den Schlüssel bereitstellende Server kann dann als Antwort auf die Anforderungsmitteilung das drahtlose Kommunikationsgerät und/oder das Fahrzeug mit der temporären Sicherheitsinformation versorgen. Die temporäre Sicherheitsinformation kann dann verwendet werden, um Kommunikationen zwischen dem drahtlosen Kommunikationsgerät und dem Fahrzeug zu verschlüsseln.

Bei den bekannten Lösungen erfolgt die Authentifizierung der Verbindung ausschließlich über Zertifikate. Eine derartige Authentifizierung erfordert weder die Interaktion des Benutzers noch den Nachweis von spezifischem Wissen, sodass der Benutzer keine Möglichkeit hat, die Authentifizierung der Verbindung zu beeinflussen.

US 2009/222659 A1 lehrt eine Kommunikationsvorrichtung zum Durchführen einer Kommunikation unter Verwendung einer ersten und einer zweiten Kommunikationseinheit. Diese umfasst: eine Empfangseinheit zum Empfangen eines Kommunikationspakets mit einer für jede Verbindung mit einer anderen Kommunikationsvorrichtung erzeugten Zufallszahl, einem mit der Zufallszahl berechneten Zertifikat und einer Authentifizierungsverfahrensinformation ob ein Authentifizierungsverfahren in der zweiten Kommunikationseinheit durch die erste Kommunikationseinheit mit dem öffentlichen Schlüsselsystem kompatibel ist oder nicht; und eine Verfahrensbestimmungseinheit zum Bestimmen, ob ein Urheber des Kommunikationspakets eine Verschlüsselung mit öffentlichem Schlüssel akzeptiert oder nicht.

Der Stand der Technik umfasst des Weiteren die Offenlegungsschriften US 2009/325491 A1 und US 2015/339334 A1.

Anonymous: "Bluetooth - Wikipedia", 22. Juli 2016 (2016-07-22) lehrt Bluetooth, einen drahtlosen Technologiestandard für den Austausch von Daten über kurze Wege.

Der Erfindung liegt nun die Aufgabe zugrunde, eine Möglichkeit bereitzustellen, welche die Sicherheit einer zertifikatsbasierten Authentifizierung einer Kommunikationsverbindung zwischen mindestens zwei Kommunikationspartnern erhöht.

Diese Aufgabe wird gelöst durch ein Verfahren gemäß Anspruch 1 beziehungsweise ein Kommunikationssystem gemäß Anspruch 7.

Bei dem erfindungsgemäßen Verfahren zum Bereitstellen einer authentifizierten Verbindung zwischen mindestens zwei Kommunikationspartnern wird eine anonyme signalleitende Verbindung zwischen den mindestens zwei Kommunikationspartnern aufgebaut und die Authentizität eines von einem ersten Kommunikationspartner der mindestens zwei Kommunikationspartner verwendeten signierten Zertifikats durch einen zweiten Kommunikationspartner der mindestens zwei Kommunikationspartner geprüft. Zusätzlich wird ein Authentifizierungscode durch den zweiten Kommunikationspartner wiedergegeben, nachdem die Prüfung der Authentizität des von dem ersten Kommunikationspartner verwendeten signierten Zertifikats erfolgt ist. Nachdem der Authentifizierungscode wiedergegeben wurde, kann ein Benutzer den von dem zweiten Kommunikationspartner wiedergegebenen Authentifizierungscode mittels des ersten Kommunikationspartners bestätigen.

Die Erfindung hat den Vorteil, dass neben einer digitalen Signatur, welche als Vertrauensanker dient, eine Benutzerhandlung zur Authentifizierung der Verbindung zwischen den mindestens zwei Kommunikationspartnern notwendig ist. Durch die Notwendigkeit, dass der Benutzer den wiedergegebenen Authentifizierungscode bestätigen muss, beruht die Authentifizierung ebenfalls auf dem Nachweis von spezifischem Wissen, nämlich dem Wissen über den Authentifizierungscode. Somit wird die Sicherheit einer zertifikatsbasierten Authentifizierung einer Kommunikationsverbindung zwischen mindestens zwei Kommunikationspartnern erhöht.

In dem Verfahren kann der erste Kommunikationspartner als fahrzeuginterne Einrichtung ausgebildet sein. Insbesondere ist die fahrzeuginterne Einrichtung als Infotainment-System des Fahrzeugs ausgeführt. Vorzugsweise agiert der erste Kommunikationspartner der mindestens zwei Kommunikationspartner als Server. Alternativ oder zusätzlich kann in dem Verfahren der zweite Kommunikationspartner als mobiles Endgerät ausgebildet sein. Insbesondere ist das mobile Endgerät als Smartphone ausgeführt. Vorzugsweise agiert der zweite Kommunikationspartner der mindestens zwei Kommunikationspartner als Client.

Die anonyme signalleitende Verbindung zwischen den mindestens zwei Kommunikationspartnern kann auf einem Transport Layer Security Protokoll basieren. Durch die hybride Verschlüsselung des Transport Layer Security Protokolls wird die Sicherheit weiter erhöht, ohne dass die Notwendigkeit eines vorausgehenden Schlüsselaustausches besteht. Das Transport Layer Security Protokoll ermöglicht es höhere Protokolle auf Basis des Transport Layer Security Protokoll Protokolls zu implementieren. Das Transport Layer Security Protokoll ist somit unabhängig von Anwendungen beziehungsweise Applikationen sowie von dem verwendeten System.

Das von dem ersten Kommunikationspartner verwendete signierte Zertifikat kann mit einem Signaturzertifikat signiert sein und das Signaturzertifikat kann dem zweiten Kommunikationspartner vorliegen. Dadurch, dass das Signaturzertifikat dem zweiten Kommunikationspartner vorliegt, kann dieser die Authentizität des Signaturzertifikats durch einen Zertifikatsabgleich prüfen. Diese Art der Authentizitätsprüfung bietet ein besonders hohes Maß an Sicherheit.

Das Prüfen der Authentizität des von dem ersten Kommunikationspartner verwendeten signierten Zertifikats durch den zweiten Kommunikationspartner kann das Überprüfen des von dem ersten Kommunikationspartner verwendeten signierten Zertifikats mit dem, dem zweiten Kommunikationspartner vorliegenden Signaturzertifikat durch den zweiten Kommunikationspartner umfassen. Das Überprüfen des von dem ersten Kommunikationspartner verwendeten signierten Zertifikats mit dem, dem zweiten Kommunikationspartner vorliegenden Signaturzertifikat durch den zweiten Kommunikationspartner kann zu einem positiven Prüfungsergebnis führen, beispielsweise durch das Feststellen der Korrektheit der Signatur des von dem ersten Kommunikationspartner verwendeten signierten Zertifikats mit dem, dem zweiten Kommunikationspartner vorliegenden Signaturzertifikat. Das Überprüfen des von dem ersten Kommunikationspartner verwendeten signierten Zertifikats mit dem, dem zweiten Kommunikationspartner vorliegenden Signaturzertifikat durch den zweiten Kommunikationspartner kann auch zu einem negativen Prüfungsergebnis führen, beispielsweise durch das Feststellen der mangelnden Korrektheit der Signatur des von dem ersten Kommunikationspartner verwendeten signierten Zertifikats mit dem, dem zweiten Kommunikationspartner vorliegenden Signaturzertifikat. In diesem Fall ist die Authentifizierung der Verbindung zwischen den mindestens zwei Kommunikationspartnern fehlgeschlagen.

Das Signaturzertifikat kann ein Zertifikat sein, welches von einer Zertifizierungsstelle herausgegeben worden ist. Insbesondere ist die Zertifizierungsstelle der Hersteller des Fahrzeugs, in welchem der erste Kommunikationspartner integriert ist. Alternativ kann die Zertifizierungsstelle auch eine Zertifizierungsstelle sein, welche digitale Zertifikate für den Automobilbereich und gegebenenfalls andere Branchen erstellt und herausgibt.

Der Authentifizierungscode kann dem Benutzer optisch durch eine Anzeigeeinrichtung des zweiten Kommunikationspartners wiedergegeben werden. Die Anzeigeeinrichtung kann beispielsweise einen Display oder einen Touchscreen umfassen. Alternativ oder zusätzlich kann der Authentifizierungscode dem Benutzer auch akustisch mittels einer Tonwiedergabeeinrichtung wiedergegeben werden.

Der Authentifizierungscode kann ein fahrzeugbezogener Code sein. Insbesondere kann der Authentifizierungscode als Buchstaben- und/oder Zahlenfolge ausgebildet sein. Vorzugsweise handelt es sich bei dem Authentifizierungscode um die Fahrzeugidentifikationsnummer des Fahrzeugs, in welchem der erste Kommunikationspartner verbaut ist. Die Fahrzeugidentifikationsnummer ist dem Benutzer entweder bekannt oder kann ohne großen Aufwand in Erfahrung gebracht werden. Da die Fahrzeugidentifikationsnummer an ein Fahrzeug gebunden ist, ist der Authentifizierungscode stets eindeutig und einzigartig. Außerdem ist der Verlust der Fahrzeugidentifikationsnummer äußerst unwahrscheinlich, da diese in sämtlichen offiziellen Fahrzeugdokumenten verzeichnet ist. Die Fahrzeugidentifikationsnummer eignet sich somit in besonderem Maße als Authentifizierungscode.

Alternativ kann der Authentifizierungscode ein nicht-fahrzeugbezogender Code sein. Beispielsweise ist der Authentifizierungscode eine frei gewählte Buchstaben- und/oder Zahlenfolge, welche etwa von dem Fahrzeughersteller erzeugt oder von dem Benutzer beim Erwerb des Fahrzeugs definiert worden ist. Auf diese Weise kann ein einprägsamer Authentifizierungscode erzeugt werden, welcher ein aufwändiges Aufsuchen des Authentifizierungscodes überflüssig macht.

Das Verfahren kann das Wiedergeben des Authentifizierungscodes durch den ersten Kommunikationspartner umfassen, wobei der Authentifizierungscode dem Benutzer vorzugsweise optisch durch eine Anzeigeeinrichtung des ersten Kommunikationspartners wiedergegeben wird. Das Wiedergeben des Authentifizierungscodes durch den ersten Kommunikationspartner führt zu einer weiteren Unterstützung des Benutzers. Insbesondere, wenn es sich bei dem Authentifizierungscode um die Fahrzeugidentifikationsnummer des Fahrzeugs handelt, ist eine derartige Unterstützung des Benutzers sinnvoll, da der Benutzer die Fahrzeugidentifikationsnummer zwar kennt, diese aber nicht ohne Weiteres aus seinem Erinnerungsvermögen abrufen kann.

Das erfindungsgemäße Kommunikationssystem umfasst mindestens zwei Kommunikationspartner, wobei die mindestens zwei Kommunikationspartner dazu eingerichtet sind, eine anonyme signalleitende Verbindung miteinander aufzubauen. Ein zweiter Kommunikationspartner der mindestens zwei Kommunikationspartner ist außerdem dazu eingerichtet, die Authentizität eines von einem ersten Kommunikationspartner der mindestens zwei Kommunikationspartner verwendeten signierten Zertifikats zu prüfen und einen Authentifizierungscode wiederzugeben, nachdem die Prüfung der Authentizität des von dem ersten Kommunikationspartner verwendeten signierten Zertifikats erfolgt ist. Der erste Kommunikationspartner ist dazu eingerichtet, dass ein Benutzer den von dem zweiten Kommunikationspartner wiedergegebenen Authentifizierungscode mittels des ersten Kommunikationspartners bestätigen kann.

Der erste Kommunikationspartner kann als fahrzeuginterne Einrichtung ausgebildet sein. Insbesondere ist die fahrzeuginterne Einrichtung als Infotainment-System des Fahrzeugs ausgeführt. Vorzugsweise agiert der erste Kommunikationspartner der mindestens zwei Kommunikationspartner als Server. Alternativ oder zusätzlich kann der zweite Kommunikationspartner als mobiles Endgerät ausgebildet. Insbesondere ist das mobile Endgerät als Smartphone ausgeführt. Vorzugsweise agiert der zweite Kommunikationspartner der mindestens zwei Kommunikationspartner als Client.

Bei dem Kommunikationssystem kann die anonyme signalleitende Verbindung zwischen den mindestens zwei Kommunikationspartnern auf einem Transport Layer Security Protokoll basieren. Durch die hybride Verschlüsselung des Transport Layer Security Protokolls wird die Sicherheit weiter erhöht, ohne dass die Notwendigkeit eines vorausgehenden Schlüsselaustausches besteht. Das Transport Layer Security Protokoll ermöglicht es höhere Protokolle auf Basis des Transport Layer Security Protokoll Protokolls zu implementieren. Das Transport Layer Security Protokoll ist somit unabhängig von Anwendungen beziehungsweise Applikationen sowie von dem verwendeten System.

Das von dem ersten Kommunikationspartner des Kommunikationssystems verwendete signierte Zertifikat kann mit einem Signaturzertifikat signiert sein und das Signaturzertifikat kann dem zweiten Kommunikationspartner des Kommunikationssystems vorliegen, wobei das Signaturzertifikat vorzugsweise ein Zertifikat ist, welches von einer Zertifizierungsstelle herausgegeben worden ist. Dadurch, dass das Signaturzertifikat dem zweiten Kommunikationspartner vorliegt, kann dieser die Authentizität des Signaturzertifikats durch einen Zertifikatsabgleich prüfen. Diese Art der Authentizitätsprüfung bietet ein besonders hohes Maß an Sicherheit.

Der erste Kommunikationspartner und/oder der zweite Kommunikationspartner des Kommunikationssystems können jeweils eine Anzeigeeinrichtung aufweisen, welche dazu eingerichtet ist, dem Benutzer den Authentifizierungscode optisch wiederzugeben. Die Anzeigeeinrichtung kann beispielsweise einen Display oder einen Touchscreen umfassen. Alternativ oder zusätzlich kann der Authentifizierungscode dem Benutzer auch akustisch mittels einer Tonwiedergabeeinrichtung wiedergegeben werden.

Das Kommunikationssystem kann außerdem dazu eingerichtet sein, das Verfahren zum Bereitstellen einer authentifizierten Verbindung zwischen mindestens zwei Kommunikationspartnern nach einer der vorstehend beschriebenen Ausführungsformen auszuführen. Es gelten die gleichen Vorteile und Modifikationen wie zuvor beschrieben.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein Ausführungsbeispiel des erfindungsgemäßen Kommunikationssystems in einer schematischen Darstellung; und
- Figur 2: ein Ausführungsbeispiel des erfindungsgemäßen Verfahrens in einem schematischen Ablaufdiagramm.

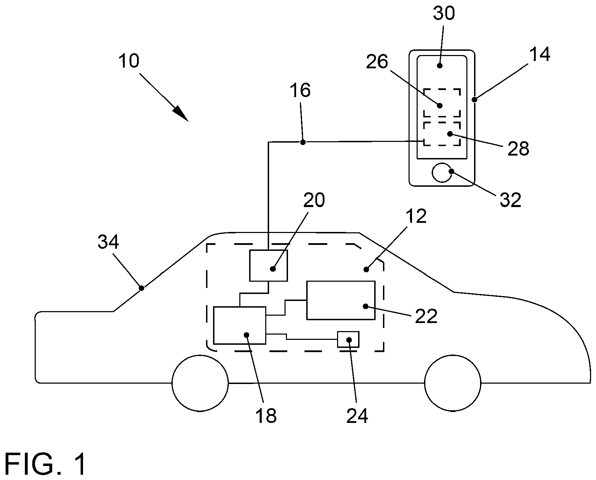

Figur 1 ein zeigt ein Kommunikationssystem 10 mit zwei Kommunikationspartnern 12, 14. Der erste Kommunikationspartner 12 ist als fahrzeuginterne Einrichtung des Fahrzeugs 34 ausgebildet, wobei die fahrzeuginterne Einrichtung ein Infotainment-System ist. Der zweite Kommunikationspartner 14 ist als mobiles Endgerät ausgebildet, wobei das mobile Endgerät als Smartphone ausgeführt ist.

Der erste Kommunikationspartner 12 umfasst eine Recheneinheit 18, ein Kommunikationsmodul 20, eine Anzeigeeinrichtung 22 und eine Betätigungseinrichtung 24. Das Kommunikationsmodul 20, die Anzeigeeinrichtung 22 und die Betätigungseinrichtung 24 sind signalleitend mit der Recheneinheit 18 verbunden. Das Kommunikationsmodul 20 ist dazu eingerichtet, drahtlos, beispielsweise per Bluetooth, mit anderen Kommunikationspartnern zu kommunizieren. Die Anzeigeeinrichtung 22 ist als Display ausgebildet und in das Armaturenbrett des Fahrzeugs 34 integriert. Die Betätigungseinrichtung 24 umfasst mehrere drucksensitive Eingabeelemente und ist in der Mittelkonsole des Fahrzeugs 34 integriert.

Der zweite Kommunikationspartner 14 umfasst ebenfalls eine Recheneinheit 26, ein Kommunikationsmodul 28, eine Anzeigeeinrichtung 30 und eine Betätigungseinrichtung 32. Das Kommunikationsmodul 28, die Anzeigeeinrichtung 30 und die Betätigungseinrichtung 24 sind signalleitend mit der Recheneinheit 26 verbunden. Das Kommunikationsmodul 28 ist dazu eingerichtet, drahtlos, beispielsweise per Bluetooth, mit anderen Kommunikationspartnern zu kommunizieren. Die Anzeigeeinrichtung 30 ist als Touchscreen ausgebildet. Die Betätigungseinrichtung 32 ist als Druckknopf ausgebildet.

Die zwei Kommunikationspartner 12, 14 sind dazu eingerichtet, eine anonyme signalleitende Verbindung 16 miteinander aufzubauen. Die anonyme signalleitende Verbindung 16 zwischen den zwei Kommunikationspartnern 12, 14 basiert auf einem Transport Layer Security Protokoll.

Der zweite Kommunikationspartner 14 ist dazu eingerichtet, die Authentizität eines von dem ersten Kommunikationspartner 12 verwendeten signierten Zertifikats zu prüfen und einen Authentifizierungscode wiederzugeben, nachdem die Prüfung der Authentizität des von dem ersten Kommunikationspartner 12 verwendeten signierten Zertifikats erfolgt ist. Die Wiedergabe des Authentifizierungscodes erfolgt optisch durch die Anzeigeeinrichtung 22 des ersten Kommunikationspartners. Der Authentifizierungscode umfasst mehrere Buchstaben und Zahlen und stimmt mit der Fahrzeugidentifikationsnummer des Fahrzeugs 34 überein.

Das von dem ersten Kommunikationspartner 12 verwendete signierte Zertifikat ist mit einem Signaturzertifikat signiert und das Signaturzertifikat liegt dem zweiten Kommunikationspartner 14 vor. Das Signaturzertifikat ist ein Zertifikat, welches von einer Zertifizierungsstelle, nämlich einem Fahrzeughersteller, herausgegeben worden ist.

Der erste Kommunikationspartner 12 ermöglicht es einem Benutzer den von dem zweiten Kommunikationspartner 14 wiedergegebenen Authentifizierungscode zu bestätigen. Das Bestätigen des wiedergegebenen Authentifizierungscodes erfolgt durch eine Betätigung der Betätigungseinrichtung 24 des ersten Kommunikationspartners 12. Damit der Benutzer die Fahrzeugidentifikationsnummer des Fahrzeugs 34 nicht in den amtlichen Fahrzeugdokumenten nachschlagen muss, bevor eine Bestätigung des wiedergegebenen Authentifizierungscodes erfolgen kann, wird die Fahrzeugidentifikationsnummer des Fahrzeugs 34 dem Benutzer zusätzlich optisch über die Anzeigeeinrichtung 22 des ersten Kommunikationspartners wiedergegeben.

Das dargestellte Kommunikationssystem 10 ist außerdem dazu eingerichtet, das Verfahren zum Bereitstellen einer authentifizierten Verbindung 16 zwischen mindestens zwei Kommunikationspartnern 12, 14 nach einem der Ansprüche 1 bis 9 auszuführen.

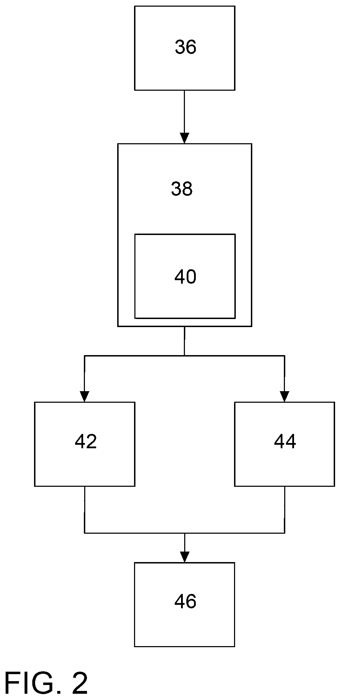

Figur 2 zeigt ein Verfahren zum Bereitstellen einer authentifizierten Verbindung 16 zwischen zwei Kommunikationspartnern 12, 14, welches mit dem folgenden Schritt beginnt:
36) Aufbauen einer anonymen signalleitenden Verbindung 16 zwischen den zwei Kommunikationspartnern 12, 14.

Der erste Kommunikationspartner 12 ist als fahrzeuginterne Einrichtung, nämlich als Infotainment-System eines Fahrzeugs 34, ausgebildet. Der zweite Kommunikationspartner 14 ist als mobiles Endgerät, nämlich als Smartphone, ausgebildet. Die anonyme signalleitende Verbindung 16 zwischen den zwei Kommunikationspartnern 12, 14 basiert auf einem Transport Layer Security Protokoll. Nachdem die anonyme signalleitende Verbindung zwischen den zwei Kommunikationspartnern 12, 14 aufgebaut wurde, wird der folgende Schritt ausgeführt:
38) Prüfen der Authentizität eines von dem ersten Kommunikationspartner 12 verwendeten signierten Zertifikats durch den zweiten Kommunikationspartner.

Das von dem ersten Kommunikationspartner 12 verwendete signierte Zertifikat ist mit einem Signaturzertifikat signiert und das Signaturzertifikat liegt dem zweiten Kommunikationspartner 14 vor. Das Signaturzertifikat ist ein Zertifikat, welches von einer Zertifizierungsstelle, nämlich einem Fahrzeughersteller, herausgegeben worden ist.

Das Prüfen der Authentizität des von dem ersten Kommunikationspartner 12 verwendeten signierten Zertifikats durch den zweiten Kommunikationspartner 14 umfasst den folgenden Schritt:
40) Überprüfen des von dem ersten Kommunikationspartner 12 verwendeten signierten Zertifikats mit dem, dem zweiten Kommunikationspartner 14 vorliegenden Signaturzertifikat durch den zweiten Kommunikationspartner 14.

Nachdem die Prüfung der Authentizität des von dem ersten Kommunikationspartner 12 verwendeten signierten Zertifikats erfolgt ist, werden die folgenden Schritte ausgeführt:
42) Wiedergeben der Fahrzeugidentifikationsnummer des Fahrzeugs 34 durch den ersten Kommunikationspartner 12; und
44) Wiedergeben des Authentifizierungscodes durch den zweiten Kommunikationspartner 14.

Der Authentifizierungscode und die Fahrzeugidentifikationsnummer werden dem Benutzer optisch durch Anzeigeeinrichtungen 22, 30 des ersten Kommunikationspartners 12 und des zweiten Kommunikationspartner 14 wiedergegeben. Der Authentifizierungscode ist ein fahrzeugbezogener Code, nämlich die Fahrzeugidentifikationsnummer des Fahrzeugs 34. Ist der von dem zweiten Kommunikationspartner 12 wiedergegebene Authentifizierungscode korrekt, also entspricht dieser der Fahrzeugidentifikationsnummer und somit auch dem von den ersten Kommunikationspartner 12 angezeigten Wert, kann die Authentifizierung der Verbindung 16 durch den folgenden Schritt abgeschlossen werden:
46) Bestätigen des von dem zweiten Kommunikationspartner 14 wiedergegebenen Authentifizierungscodes durch einen Benutzer mittels des ersten Kommunikationspartners 12.

Die Bestätigung des von dem zweiten Kommunikationspartner 14 wiedergegebenen Authentifizierungscodes erfolgt durch die Betätigung einer Betätigungseinrichtung 24 des ersten Kommunikationspartners 12.

Die Erfindung ermöglicht durch die Kombination einer zertifikatsbasierten Authentifizierung mit einer wissensbasierten Authentifizierung die Erhöhung der Authentifizierungssicherheit und führt somit zu einer sichereren Kommunikation zwischen zwei oder mehreren Kommunikationspartnern.

### Bezugszeichenliste

- 10: Kommunikationssystem
- 12: erster Kommunikationspartner
- 14: zweiter Kommunikationspartner
- 16: Verbindung
- 18: Recheneinheit
- 20: Kommunikationsmodul
- 22: Anzeigeeinrichtung
- 24: Betätigungseinrichtung
- 26: Recheneinheit
- 28: Kommunikationsmodul
- 30: Anzeigeeinrichtung
- 32: Betätigungseinrichtung
- 34: Fahrzeug
- 36-46: Verfahrensschritte

## Patentansprüche

1. Verfahren zum Bereitstellen einer authentifizierten Verbindung (16) zwischen mindestens zwei Kommunikationspartnern (12, 14), mit den Schritten:
- Aufbauen einer anonymen signalleitenden Verbindung (16) zwischen den mindestens zwei Kommunikationspartnern (12, 14);
- Prüfen der Authentizität eines von einem ersten Kommunikationspartner (12) der mindestens zwei Kommunikationspartner (12, 14) verwendeten signierten Zertifikats durch einen zweiten Kommunikationspartner (14) der mindestens zwei Kommunikationspartner (12, 14);
- Wiedergeben eines Authentifizierungscodes durch den zweiten Kommunikationspartner (14), nachdem die Prüfung der Authentizität des von dem ersten Kommunikationspartner (12) verwendeten signierten Zertifikats erfolgt ist; und
- Bestätigen des von dem zweiten Kommunikationspartner (14) wiedergegebenen Authentifizierungscodes durch einen Benutzer mittels des ersten Kommunikationspartners (12);
- wobei die anonyme signalleitende Verbindung (16) zwischen den mindestens zwei Kommunikationspartnern (12, 14) auf einem Transport Layer Security Protokoll basiert; - wobei der erste Kommunikationspartner (12) als fahrzeuginterne Einrichtung ausgebildet ist; und
- wobei der Authentifizierungscode ein fahrzeugbezogener Code ist.

2. Verfahren nach Anspruch 1, **dadurch gekennzeichnet, dass** das von dem ersten Kommunikationspartner (12) verwendete signierte Zertifikat mit einem Signaturzertifikat signiert ist und das Signaturzertifikat dem zweiten Kommunikationspartner (14) vorliegt.

3. Verfahren nach Anspruch 2, **dadurch gekennzeichnet, dass** das Prüfen der Authentizität des von dem ersten Kommunikationspartner (12) verwendeten signierten Zertifikats durch den zweiten Kommunikationspartner (14) den folgenden Schritt umfasst:
- Überprüfen des von dem ersten Kommunikationspartner (12) verwendeten signierten Zertifikats mit dem, dem zweiten Kommunikationspartner (14) vorliegenden Signaturzertifikat durch den zweiten Kommunikationspartner (14).

4. Verfahren nach Anspruch 2 oder 3, **dadurch gekennzeichnet, dass** das Signaturzertifikat ein Zertifikat ist, welches von einer Zertifizierungsstelle herausgegeben worden ist.

5. Verfahren nach einem der vorhergehenden Ansprüche, **dadurch gekennzeichnet, dass** der Authentifizierungscode dem Benutzer optisch durch eine Anzeigeeinrichtung (30) des zweiten Kommunikationspartners (14) wiedergegeben wird.

6. Verfahren nach einem der vorhergehenden Ansprüche, **gekennzeichnet durch** den Schritt:
- Wiedergeben des Authentifizierungscodes durch den ersten Kommunikationspartner (12);
wobei der Authentifizierungscode dem Benutzer vorzugsweise optisch durch eine Anzeigeeinrichtung (22) des ersten Kommunikationspartners (12) wiedergegeben wird.

7. Kommunikationssystem (10), mit
- mindestens zwei Kommunikationspartnern (12, 14),
wobei die mindestens zwei Kommunikationspartner (12, 14) dazu eingerichtet sind, eine anonyme signalleitende Verbindung (16) miteinander aufzubauen,
**dadurch gekennzeichnet, dass** ein zweiter Kommunikationspartner (14) der mindestens zwei Kommunikationspartner (12, 14) dazu eingerichtet ist, die Authentizität eines von einem ersten Kommunikationspartner (12) der mindestens zwei Kommunikationspartner (12, 14) verwendeten signierten Zertifikats zu prüfen und einen Authentifizierungscode wiederzugeben, nachdem die Prüfung der Authentizität des von dem ersten Kommunikationspartner (12) verwendeten signierten Zertifikats erfolgt ist, und dass der erste Kommunikationspartner (12) dazu eingerichtet ist, dass ein Benutzer den von dem zweiten Kommunikationspartner (14) wiedergegebenen Authentifizierungscode mittels des ersten Kommunikationspartners (12) bestätigen kann; wobei
die anonyme signalleitende Verbindung (16) zwischen den mindestens zwei Kommunikationspartnern (12, 14) auf einem Transport Layer Security Protokoll basiert;
wobei der erste Kommunikationspartner (12) als fahrzeuginterne Einrichtung ausgebildet ist; und
wobei der Authentifizierungscode ein fahrzeugbezogener Code ist.

8. Kommunikationssystem (10) nach Anspruch 7, **dadurch gekennzeichnet, dass** das von dem ersten Kommunikationspartner (12) verwendete signierte Zertifikat mit einem Signaturzertifikat signiert ist und das Signaturzertifikat dem zweiten Kommunikationspartner (14) vorliegt, wobei das Signaturzertifikat vorzugsweise ein Zertifikat ist, welches von einer Zertifizierungsstelle herausgegeben worden ist.

9. Kommunikationssystem (10) nach einem der Ansprüche 7 oder 8, **dadurch gekennzeichnet, dass** der erste Kommunikationspartner (12) und/oder der zweite Kommunikationspartner (14) jeweils eine Anzeigeeinrichtung (22, 30) aufweisen, welche dazu eingerichtet ist, dem Benutzer den Authentifizierungscode optisch wiederzugeben.

10. Kommunikationssystem (10) nach einem der Ansprüche 7 bis 9, **dadurch gekennzeichnet,**
**dass** das Kommunikationssystem (10) dazu eingerichtet ist, das Verfahren zum Bereitstellen einer authentifizierten Verbindung (16) zwischen mindestens zwei Kommunikationspartnern (12, 14) nach einem der Ansprüche 1 bis 6 auszuführen.

## Claims

1. Method for providing an authenticated connection (16) between at least two communication partners (12, 14), comprising the steps of:
- establishing an anonymous signal-carrying connection (16) between the at least two communication partners (12, 14);
- checking, by a second communication partner (14) of the at least two communication partners (12, 14), the authenticity of a signed certificate used by a first communication partner (12) of the at least two communication partners (12, 14);
- displaying of an authentication code by the second communication partner (14) after the checking of the authenticity of the signed certificate used by the first communication partner (12) has taken place; and
- confirming, by a user by means of the first communication partner (12), the authentication code displayed by the second communication partner (14);
- wherein the anonymous signal-carrying connection (16) between the at least two communication partners (12, 14) is based on a Transport Layer Security protocol;
- wherein the first communication partner (12) is designed as an in-vehicle device; and
- wherein the authentication code is a vehicle-related code.

2. Method according to Claim 1, **characterized in that** the signed certificate used by the first communication partner (12) is signed with a signature certificate, and the signature certificate is available to the second communication partner (14).

3. Method according to Claim 2, **characterized in that** the checking, by the second communication partner (14), of the authenticity of the signed certificate used by the first communication partner (12) comprises the following step:
- checking, by the second communication partner (14), the signed certificate used by the first communication partner (12) with the signature certificate available to the second communication partner (14).

4. Method according to Claims 2 or 3, **characterized in that** the signature certificate is a certificate which has been issued by a certification authority.

5. Method according to any one of the preceding claims, **characterized in that** the authentication code is displayed optically to the user by a display device (30) of the second communication partner (14).

6. Method according to any one of the preceding claims, **characterized by** the step:
- displaying of the authentication code by the first communication partner (12);
wherein the authentication code is preferably displayed optically to the user by a display device (22) of the first communication partner (12).

7. Communication system (10), having
- at least two communication partners (12, 14),
wherein the at least two communication partners (12, 14) are configured to establish an anonymous signal-carrying connection (16) with one another, **characterized in that** a second communication partner (14) of the at least two communication partners (12, 14) is configured to check the authenticity of a signed certificate used by a first communication partner (12) of the at least two communication partners (12 14), and to display an authentication code after the checking of the authenticity of the signed certificate used by the first communication partner (12) has taken place; and **in that** the first communication partner (12) is configured to enable a user to confirm the authentication code displayed by the second communication partner (14) by means of the first communication partner (12); wherein
the anonymous signal-carrying connection (16) between the at least two communication partners (12, 14) is based on a Transport Layer Security protocol;
wherein the first communication partner (12) is designed as an in-vehicle device; and
wherein the authentication code is a vehicle-related code.

8. Communication system (10) according to Claim 7, **characterized in that** the signed certificate used by the first communication partner (12) is signed with a signature certificate, and the signature certificate is available to the second communication partner (14), wherein the signature certificate is preferably a certificate issued by a certification authority.

9. Communication system (10) according to either of Claims 7 or 8, **characterized in that** the first communication partner (12) and/or the second communication partner (14) respectively have a display device (22, 30) which is configured to optically display the authentication code to the user.

10. Communication system (10) according to any one of Claims 7 to 9, **characterized in that** the communication system (10) is configured to execute the method for providing an authenticated connection (16) between at least two communication partners (12, 14) according to any one of Claims 1 to 6.

## Revendications

1. Procédé permettant d'obtenir une liaison authentifiée (16) entre au moins deux partenaires de communication (12, 14) comprenant les étapes :
- d'établissement d'une liaison conductrice de signaux anonyme (16) entre les au moins deux partenaires de communication (12, 14) ;
- de vérification de l'authenticité d'un certificat signé utilisé par un premier partenaire de communication (12) des au moins deux partenaires de communication (12, 14) par un deuxième partenaire de communication (14) des au moins deux partenaires de communication (12, 14) ;
- de reproduction d'un code d'authentification par le deuxième partenaire de communication (14), une fois la vérification de l'authenticité du certificat signé utilisé par le premier partenaire de communication (12) effectuée ; et
- de confirmation du code d'authentification reproduit par le deuxième partenaire de communication (14) par un utilisateur au moyen du premier partenaire de communication (12) ;
- dans lequel la liaison conductrice de signaux anonyme (16) entre les au moins deux partenaires de communication (12, 14) est basée sur un protocole de sécurité de couche de transport ;
- dans lequel le premier partenaire de communication (12) est conçu comme un dispositif interne à un véhicule ; et
- dans lequel le code d'authentification est un code relatif au véhicule.

2. Procédé selon la revendication 1, **caractérisé en ce que** le certificat signé utilisé par le premier partenaire de communication (12) est signé avec un certificat de signature et le certificat de signature est disponible pour le deuxième partenaire de communication (14).

3. Procédé selon la revendication 2, **caractérisé en ce que** la vérification de l'authenticité du certificat signé, utilisé par le premier partenaire de communication (12), par le deuxième partenaire de communication (14) comprend les étapes suivantes :
- inspection, par le deuxième partenaire de communication (14), du certificat signé utilisé par le premier partenaire de communication (12) avec le certificat de signature disponible pour le deuxième partenaire de communication (14).

4. Procédé selon la revendication 2 ou 3, **caractérisé en ce que** le certificat de signature est un certificat qui a été émis par une autorité de certification.

5. Procédé selon l'une quelconque des revendications précédentes, **caractérisé en ce que** le code d'authentification est reproduit pour l'utilisateur optiquement par un dispositif d'affichage (30) du deuxième partenaire de communication (14).

6. Procédé selon l'une quelconque des revendications précédentes, **caractérisé par** l'étape :
- de reproduction du code d'authentification par le premier partenaire de communication (12) ;
dans lequel le code d'authentification est reproduit pour l'utilisateur de préférence optiquement par un dispositif d'affichage (22) du premier partenaire de communication (12).

7. Système de communication (10), comprenant
- au moins deux partenaires de communication (12, 14),
dans lequel les au moins deux partenaires de communication (12, 14) sont conçus pour établir une liaison conductrice de signaux anonyme (16) l'un avec l'autre,
**caractérisé en ce qu'**un deuxième partenaire de communication (14) des au moins deux partenaires de communication (12, 14) est conçu pour vérifier l'authenticité d'un certificat signé utilisé par un premier partenaire de communication (12) des au moins deux partenaires de communication (12, 14) et pour reproduire un code d'authentification une fois la vérification de l'authenticité du certificat signé utilisé par le premier partenaire de communication (12) effectuée et **en ce que** le premier partenaire de communication (12) est conçu pour qu'un utilisateur puisse confirmer le code d'authentification reproduit par le deuxième partenaire de communication (14) au moyen du premier partenaire de communication (12) ; dans lequel
la liaison conductrice de signaux anonyme (16) entre les au moins deux partenaires de communication (12, 14) est basée sur un protocole de sécurité de couche de transport ;
dans lequel le premier partenaire de communication (12) est conçu comme un dispositif interne à un véhicule ; et
dans lequel le code d'authentification est un code relatif au véhicule.

8. Système de communication (10) selon la revendication 7, **caractérisé en ce que** le certificat signé utilisé par le premier partenaire de communication (12) est signé avec un certificat de signature et le certificat de signature est disponible pour le deuxième partenaire de communication (14), dans lequel le certificat de signature est de préférence un certificat qui a été émis par une autorité de certification.

9. Système de communication (10) selon l'une quelconque des revendications 7 ou 8, **caractérisé en ce que** le premier partenaire de communication (12) et/ou le deuxième partenaire de communication (14) présentent respectivement un dispositif d'affichage (22, 30), qui est conçu pour reproduire le code d'authentification pour l'utilisateur.

10. Système de communication (10) selon l'une quelconque des revendications 7 à 9, **caractérisé en ce que** le système de communication (10) est conçu pour exécuter le procédé permettant d'obtenir une liaison authentifiée (16) entre au moins deux partenaires de communication (12, 14) selon l'une quelconque des revendications 1 à 6.
